# EUROPEAN PATENT SPECIFICATION

(11) **EP 3 153 419 B1**
(45) Date of publication and mention of the grant of the patent: **06.06.2018**
(21) Application number: 15306558.6
(22) Date of filing: 05.10.2015
(51) Int. Cl.: B65C 9/40, B67C 3/02, G01N 21/90

(54) **A METHOD AND AN APPARATUS FOR HANDLING RECEPTACLES**
VERFAHREN UND VORRICHTUNG ZUR HANDHABUNG VON BEHÄLTERN
PROCÉDÉ ET APPAREIL DE MANIPULATION DE RÉCIPIENTS

(43) Date of publication of application: 12.04.2017
(73) Proprietor: SIDEL PARTICIPATIONS, 76930 Octeville-sur-Mer (FR)
(72) Inventor: ZONI, Roberto, 43126 Parma (IT); ROSSI, Mirko, 43126 Parma (IT)
(74) Representative: Siloret, Patrick

(56) References cited:
- EP-A1- 2 749 501
- DE-A1-102008 034 744
- JP-A- 2000 158 527
- US-A1- 2015 274 438

## Description

### TECHNICAL FIELD

The present invention relates to a method and an apparatus for labeling and filling receptacles with pourable products, in particular carbonated liquids, such as sparkling water, soft drinks and beer, which the following description will refer to, although this is in no way intended to limit the scope of protection as defined by the accompanying claims.

The present invention may be also used to particular advantage for any type of receptacles, such as containers or bottles made of base components, like glass, plastics, aluminum, steel, and composite containers, and for any type of pourable product, such as non-carbonated liquids (including still water, juices, teas, sport drinks, liquid cleaners, wine, etc), emulsions, suspensions, high viscosity liquids and beverages containing pulps.

### BACKGROUND ART

The above-mentioned receptacles are commonly filled with pourable products, capped, labeled and subjected to further packaging operations prior to be distributed as batches of receptacles to sale points.

In particular, the overall packaging process comprises manifold processing steps including for example, the rinsing, the sterilization, the filling, the labeling and the capping of the receptacles. The processing steps are typically performed by a variety of processing machines, such as rinsing machines, sterilization machines, filling machines, capping machines and labeling machines.

These processing machines can be defined by linear machines or, more commonly, by carousel-type machines. The following description will refer to carousel-type machines only, although this is in no way intended to limit the scope of protection of the present application.

Known from US2015/0274438 is a machine as defined in the preamble of claim 1.

Most typically, the filling and labeling of a succession of receptacles is performed while the receptacles are conveyed by one carousel-type conveyor during the filling process and while the receptacles are conveyed by another carousel-type conveyor during the labeling process. Furthermore, labeling of each receptacle is obtained before or after the filling thereof; in the latter case, each receptacle is also capped before labeling.

More recently, however, a new type of more compact machine has been proposed, which is capable of performing both the filling and labeling operations on the receptacles within one common carousel-type conveyor.

More specifically, each receptacle is fed by feeding means to the carousel, which continuously rotates around a central axis.

The carousel has, at its periphery, a plurality of handling units advancing along a path defined by the rotation of the carousel itself and each configured to carry one respective receptacle with its axis parallel to the carousel axis.

In particular, each handling unit comprises a pedestal configured to support the relative receptacle in a vertical position and to rotate the receptacle itself about its axis during advancement produced by the carousel.

Each handling unit further comprises a filling device apt to fill the relative receptacle with a pourable product during rotation of the carousel.

This new type of machine further comprises labeling means arranged peripherally adjacent to the carousel and adapted to transfer to the latter a succession of labels, in particular received by the receptacles carried by the respective handling units.

For this reason, the labeling means are further apt to supply a pattern of glue onto the back surface of each label, in particular in the proximity of a leading and trailing edge of the label itself. In use, at first the leading edge of each label is attached to the respective receptacle; upon further transfer of such label and upon rotation of the corresponding receptacle around its axis, the label is wrapped around the receptacle until finally the trailing edge is aligned and attached above the leading edge of the label itself.

In principle, these new machines allow for labeling the receptacles before the filling thereof.

A drawback of all the described apparatuses lies in the fact that the filling of each receptacle is performed independently of the correct application of the label attached to the receptacle itself. In some cases, however, an incorrect application of the labels on the respective receptacles may occur. In these cases, the receptacles are not suited to be distributed to the sale points. Accordingly, the filled and labeled receptacle must be disposed of, leading to undesired economical losses.

### DISCLOSURE OF INVENTION

It is therefore an object of the present invention to provide a method and an apparatus for handling receptacles to overcome, in a straightforward and low-cost manner, the aforementioned drawback.

According to the present invention, there is provided an apparatus for handling a receptacle as claimed in claim 1 and a method for handling a receptacle as claimed in claim 10.

### BRIEF DESCRIPTION OF THE DRAWINGS

A non-limiting embodiment of the present invention will be described by way of example with reference to the accompanying drawings, in which:
Figure 1 shows a schematic top plan view of a preferred embodiment of an apparatus for handling receptacles according to the present invention, with parts removed for clarity;
Figure 2 shows a perspective side view of a portion of the apparatus of Figure 1, with parts removed for clarity;
Figure 3 shows a partially sectioned side view of a handling unit of the apparatus of Figure 1, with details removed for clarity;
Figure 4 shows a schematic side view of a receptacle with a correctly applied label;
Figure 5 shows a schematic side view of a receptacle with a first example of a wrongly applied label;
Figure 6 shows a schematic side view of a receptacle with a second example of a wrongly applied label;
Figure 7 shows a schematic side view of a receptacle with two correctly applied labels.

### BEST MODES FOR CARRYING OUT THE INVENTION

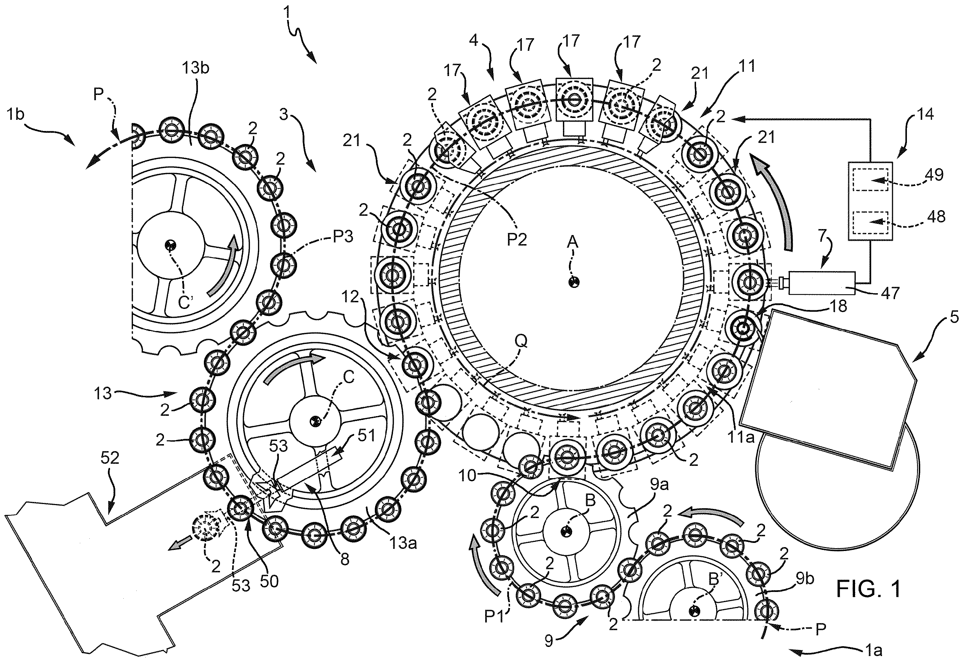

Number 1 in Figure 1 indicates as a whole a receptacle handling apparatus for filling and labeling receptacles 2 during advancement along a path P from an inlet position 1a to an outlet position 1b, only partially shown to the extent that is necessary for the comprehension of the present invention.

Apparatus 1 comprises:
- conveying means 3 adapted to convey a succession of receptacles 2 from inlet position 1a to the outlet position 1b;
- filling means 4 configured to fill each receptacle 2 with a pourable product as such receptacle 2 is advanced along path P;
- labeling means 5 configured to apply at least one label 6 onto each receptacle 2 during advancement of the receptacle 2 along path P;
- correct labeling detection means 7 adapted to detect correctness of the application of each label 6 on the respective receptacle 2 according to one or more predetermined criterions; and
- electronic control means 14 arranged to cooperate with correct labeling detection means 7 to control the operation of filling means 4 based on the correctness of the labeling of the receptacles 2.

Apparatus 1 further comprises receptacle expelling means 8 arranged downstream of correct labeling detection means 7 along path P and adapted to selectively expel the receptacle 2 or the receptacles 2 from path P having an incorrectly applied label/labels 6.

Conveying means 3 comprise:
- receptacle feeding means 9 configured to receive receptacles 2 in a known manner at inlet position 1a and to advance said receptacles 2 along a first portion P1 of path P to a first transfer position 10;
- a carousel 11 rotatable around a vertically extending rotation axis A, arranged downstream of feeding means 9 along path P, and adapted to receive receptacles 2 from feeding means 9 at first transfer position 10 and to convey receptacles 2 along a second portion P2 of path P, in particular from first transfer position 10 to a second transfer position 12; and
- discharge means 13 placed downstream of carousel 11 along path P, configured to receive receptacles 2 from carousel 11, in particular at second transfer position 12, and to advance receptacles 2 along a third portion P3 of path P to outlet position 1b.

In particular, feeding means 9 comprise a plurality of star wheels 9a, 9b, two in the example of Figure 1, each of which is rotatable about one respective rotation axis B, B' parallel to axis A. In more detail, star wheel 9a is arranged peripherally adjacent, in particular tangential, to carousel 11 at first transfer position 10.

Discharge means 13 comprise one or more star wheels 13a, 13b, two in the specific example of Figure 1, adapted to rotate around respective rotation axes C and C', parallel to axes A, B and B'. Star wheels 13a, 13b are configured to convey receptacles 2 from second transfer position 12 to outlet position 1b for transferring filled receptacles 2 to further processing machines (not shown and known as such). Star wheel 13a is arranged peripherally, in particular tangential to carousel 11 at second transfer position 12.

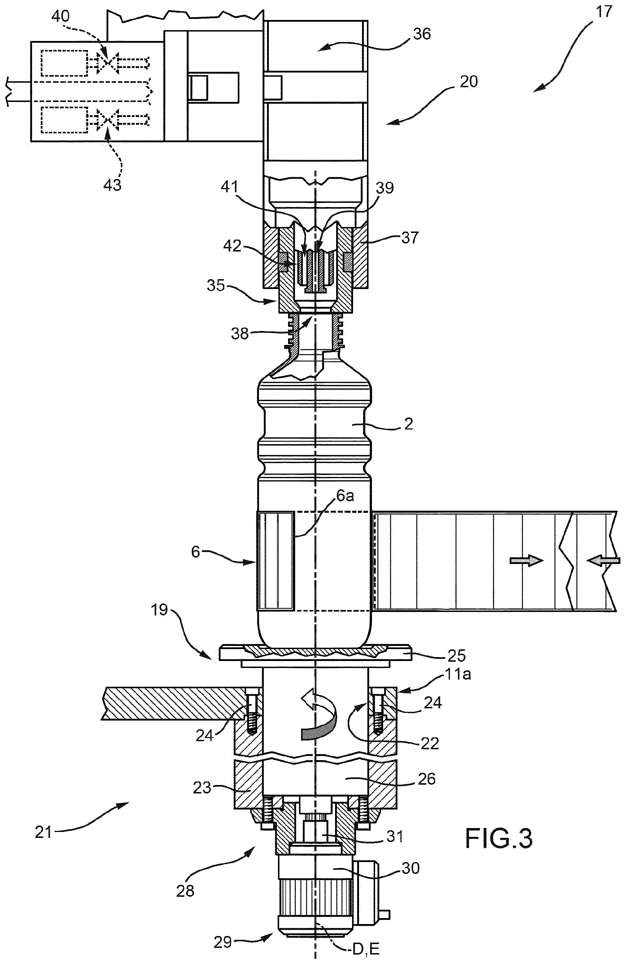

With reference to Figures 1 and 3, apparatus 1 comprises a plurality of handling units 17 having filling means 4 and being equally spaced angularly about axis A and mounted along a peripheral portion 11a of the carousel 11 itself.

Accordingly, each handling unit 17 is advanced by carousel 11 along a circular path Q extending about axis A and through positions 10 and 12. Each handling unit 17 is apt to carry one respective receptacle 2, in particular in a vertical position, i.e. having a longitudinal axis D parallel to axis A. Furthermore, each handling unit 17 is configured to rotate the respective receptacle 2 around axis D during advancement along path P, in particular along portion P2.

It must be noted that portion P2 of path P corresponds to an arc of path Q, preferably greater than 270°. More specifically, portion P2 of path P is identical to path Q between transfer position 10 and transfer position 12.

Furthermore, labeling means 5 are placed peripherally adjacent to carousel 11, downstream of first transfer position 10 along path P, in particular along portion P2 of path P. Labeling means 5 are adapted to transfer a succession of labels 6 to carousel 11, each of which having a substantially rectangular configuration.

In particular, labeling means 5 are configured to feed, in a known manner, one label 6 to one respective handling unit 17 carrying one respective receptacle 2 for attaching such label 6 to the receptacle 2 itself during advancement of the latter along portion P2 of path P.

Labeling means 5 cooperate with carousel 11 at a label transfer position 18, interposed between transfer positions 10 and 12 along portion P2 of path P.

More specifically, labeling means 5 are configured to supply a pattern of glue onto the back side of each label 6, in particular in the proximity of a leading edge 6a and of a trailing edge 6b of the label 6 allowing for sticking the label 6 itself to the respective receptacle 2.

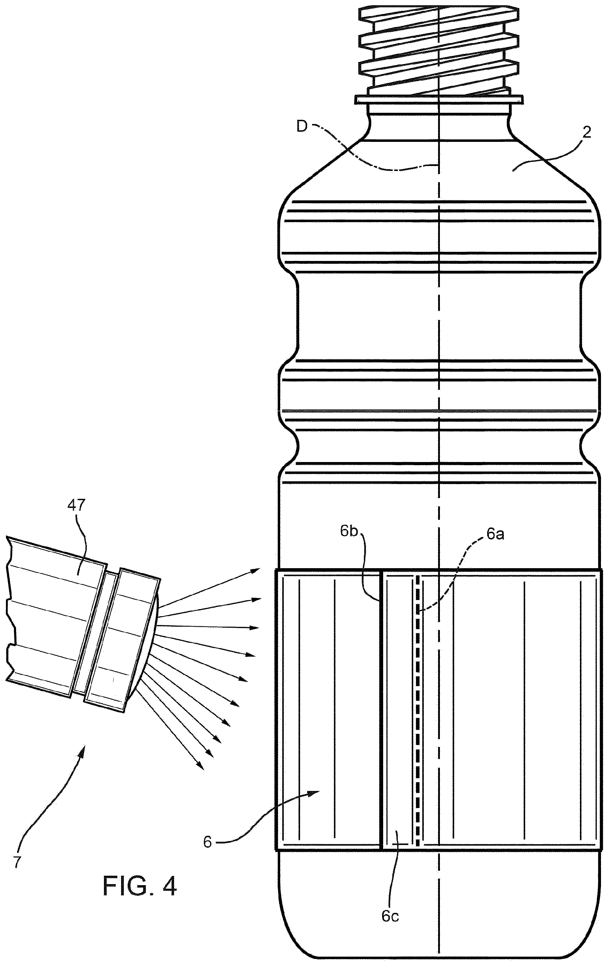

Each handling unit 17 and labeling means 5 are adapted to cooperate in such a manner to wrap one respective label 6 around one respective receptacle 2. In more detail, each label 6 is applied to the respective receptacle 2 starting from the leading edge 6a. Upon rotation of the receptacle 2 around axis D and further advancement of the label 6, this latter becomes wrapped around the receptacle 2 itself until finally the trailing edge 6b is superimposed on the leading edge 6a. Thereby, a seam section 6c of the wrapped-around label 6 is obtained (see Figure 4).

With reference to Figure 3, each handling unit 17 comprises a support device 19 adapted to receive and retain one respective receptacle 2, preferentially in a vertical position, in which axis D of the receptacle 2 is oriented parallel to axis A of carousel 11.

Furthermore, filling means 4 comprise a plurality of filling devices 20 each of which is part of one respective handling unit 17 and each of which is configured to selectively feed the pourable product into one respective receptacle 2 as handling unit 17 advances along path Q and as the respective receptacle 2 advances along path P.

In more detail, peripheral portion 11a of carousel 11 has a plurality of support assemblies 21 equally spaced angularly about axis A; each support assembly 21 is configured to support one respective handling unit 17, in particular one respective support device 19.

Each support assembly 21 comprises one respective opening 22 formed into peripheral portion 11a, and a respective support sleeve 23 protruding downwards from the edge of the opening 21 and parallel to axis A; in the specific example of Figure 3, support sleeve 23 is secured to the bottom face of the edge of the opening 22 by fixing screws 24.

Each support device 19 comprises a support plate 25 rotatable around a rotation axis E parallel to axis A and adapted to receive and coaxially retain one respective receptacle 2.

Each support device 19 further comprises a support cylinder 26 coaxial with and connected to support plate 25 so as to rotate with the latter about axis E. Each support cylinder 26 engages both respective opening 22 and respective support sleeve 23.

Furthermore, each support device 19 comprises a drive unit 28 adapted to actuate rotation of the respective support plate 25 and support cylinder 26 around rotation axis E; consequently, drive unit 28 is adapted to rotate the respective receptacle 2 around its axis D.

Each drive unit 28 has an electric motor 29 having a casing 30, coaxially secured to a bottom end of the relative support sleeve 23, and an output shaft 31 supported in a rotatable manner by casing 29 and coupled to a bottom end of the respective support cylinder 26.

With further reference to Figure 3, filling device 20 comprises a filling head 35 arranged above support plate 25, in particular in such a manner that the respective receptacle 2 is interposed between the corresponding support plate 25 and filling head 35. Furthermore, each filling device 20, in particular each filling head 35, is adapted to rotatably secure one respective receptacle 2 on the respective support plate 25 in a manner known as such and not further described.

Each filling head 35 comprises a support block 36 secured, in a manner known per se and not shown, to the carousel 11 and terminating towards the respective receptacle 2 with a hollow body portion 37, in the specific example having a tubular configuration.

Each filling head 35 further comprises an outlet mouth 38 adapted to establish a fluid connection between a pourable product storage tank (not shown and known as such) and the inner of the respective receptacle 2.

Each outlet mouth 38 is rotatably housed within the respective support block 36, in particular within the respective hollow body portion 37.

In more detail, each outlet mouth 38 comprises:
- a central conduit 39 adapted to selectively connect in a known manner to a pressurization circuit 40 of the respective filling device 20 for pressurizing the respective receptacle 2 with a pressurization gas, e.g. carbon dioxide, prior to the labeling and filling of the receptacle 2 itself;
- a first annular conduit 41 extending around the conduit 39 and adapted to provide for the fluidic connection between the product storage tank and the inner of the respective receptacle 2; and
- a second annular conduit 42 formed between an inner side wall of outlet mouth 38 and an outer side wall of the conduit 41 and adapted to selectively connect to a decompression circuit 43 of the respective filling device 20 for discharging the pressurization gas introduced into the respective receptacle 2.

As visible in Figures 1 and 4 to 6, correct labeling detection means 7 comprise at least one imaging device 47, in particular having a camera, arranged peripherally adjacent to carousel 11 and downstream of labeling means 5 along path P, in particular along portion P2; imaging device 47 is adapted to inspect and/or image the respective label 6 applied to the respective receptacle 2.

With reference to Figure 1, electronic control means 14 comprise a calculation unit 48 apt to cooperate with imaging device 47 for evaluating the correctness of the application of each label 6 based on one or more predetermined criterions. In particular, the calculation unit 48 is configured to analyze one or more images of each label 6 recorded by imaging device 47 for evaluating the correctness of the application of such label 6 based on the one or more predetermined criterions.

The electronic control means 14 also comprise an activation/deactivation unit 49 for controlling each filling device 20 based on the correctness of the labeling of the respective receptacle 2.

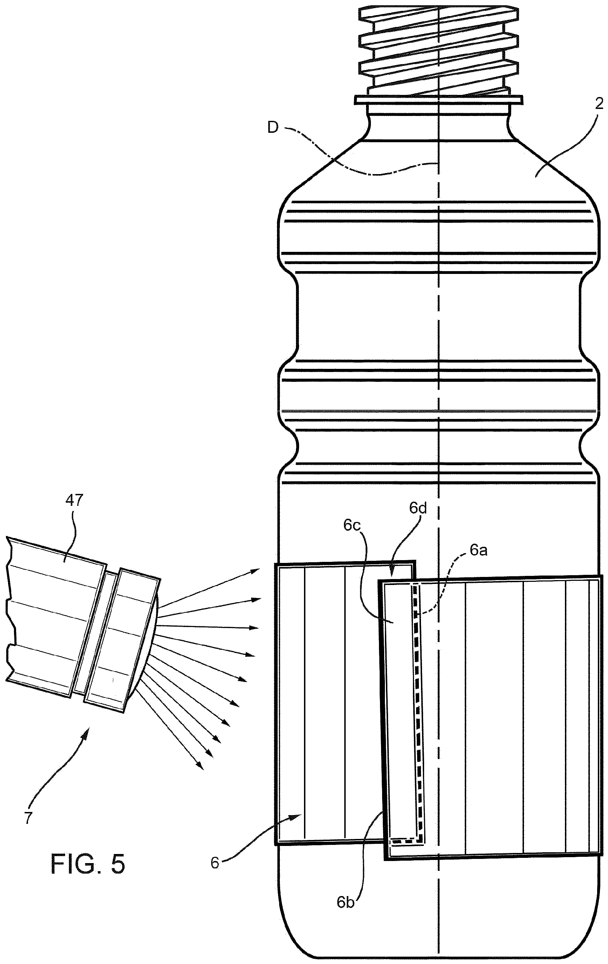

In general, during the application of each label 6 onto the respective receptacle 2, the trailing edge 6b becomes superimposed on the leading edge 6a; accordingly, in the ideal case, as illustrated in Figure 4, leading and trailing edges 6a, 6b are aligned with respect to each other. The corresponding seam section 6c has a double layer structure. In some instances, during the labeling process, it occurs that the leading and trailing edges 6a, 6b are vertically shifted with respect to each other (see Figure 5). This leads to the seam section 6c having a single layer structure in one or more areas 6d.

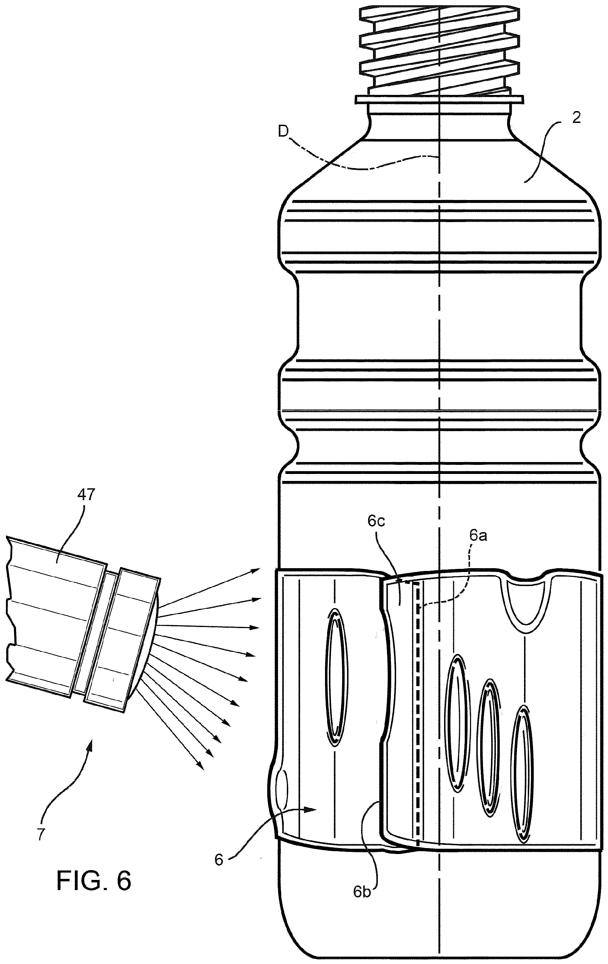

Furthermore, generally, a label 6 correctly applied on one respective receptacle 2 is aligned on the outer surface of the receptacle 2 itself and has an even surface structure (see Figure 4). In some instances, however, the application is erroneous and the applied label 6 presents a crimped structure with an uneven surface (see Figure 6) .

In particular, the correctness of the labeling is evaluated based on either one or a combination of the following criterions:
- alignment of seam section 6c: seam section 6c is imaged and it is determined whether areas 6d with single layer structure are present; the presence of areas 6d with single layer structure can still be tolerated up to a predetermined threshold value; and
- surface structure of the label 6: the whole label 6 is imaged and the surface structure is obtained for evaluating the presence of wrinkles; wrinkles can be tolerated up to a predetermined threshold value.

Accordingly, the calculation unit 48 virtually tags receptacles 2 as having correctly or wrongly applied labels 6.

Furthermore, the calculation unit 48 cooperates with the activation/deactivation unit 49 which selectively controls the filling of the receptacles 2 carried by the respective handling units 17. Advantageously, receptacles 2 having correctly attached labels 6 are filled and receptacles 2 having wrongly attached labels 6 are not filled. Thus, in one embodiment, the filling is not initiated prior to the detection of the correctness of application of the respective label 6 on one respective receptacle 2. In another embodiment, however, the filling of the respective receptacle 2 is started during or immediately after labeling so that the filling is interrupted immediately after determining the presence of a wrongly applied label 6.

More specifically, correct labeling detection means 7, in particular imaging device 47 in cooperation with the calculation unit 48 determine whether a label 6 is correctly applied based on analyzing the relative seam section 6d and/or the label surface structure. The activation/deactivation unit 49 cooperating with the correct labeling detection means 7 controls the filling means 4, in particular the respective filling devices 20 for selectively filling the receptacles 2 with the pourable product. A receptacle 2 having a correctly applied label 6 is filled with the pourable product by the respective filling device 20. A receptacle 2 having a wrongly applied label 6 is not filled by the respective filling device 20 or at least the filling is interrupted immediately after determining the wrong application of the label 6.

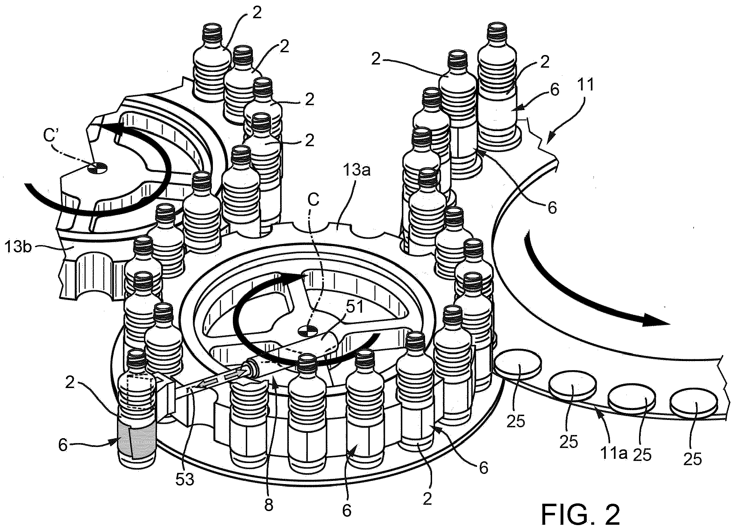

With reference to Figures 1 and 2, receptacle expelling means 8 are arranged in the area of discharge means 13, in particular of star wheel 13a, for expelling the receptacles 2 having wrongly applied labels 6, at an expelling position 50 along path P.

More specifically, expelling means 8 comprise a pushing element 51 selectively activated to push the receptacles 2 having wrongly applied labels 6 out of path P. Expelling means 8 also comprise an expelled-receptacle magazine 52 placed peripherally adjacent to star wheel 13a and apt to collect the receptacles 2 expelled from path P by pushing element 51.

Furthermore, pushing element 51 comprises a piston 53 configured to be moved between a retracted position and an advanced position. Piston 53 is configured to contact the receptacles 2 during transition from the retracted position to the advanced position for transmitting a pushing force to the receptacles 2 to be expelled.

In the specific example shown, pushing element 51 acts on the receptacles 2 by means of a mechanically transmitted pushing force; however, it must be understood, that pushing element 51 can e.g. alternatively act by means of a pneumatic mechanism in which pressurized air transmits the pushing force for removing the receptacles 2 from path P and for directing them into the expelled-receptacle magazine 52. It must be further understood that also more than one pushing element 51 may be used.

Advantageously, expelled-receptacle magazine 52 is also configured to feed non-filled receptacles 2 to a recycling circuit (not shown) for recycling the expelled and non-filled receptacles 2.

Preferably, the recycling circuit is adapted to remove the wrongly applied labels 6 from the respective receptacles 2; to remove the remaining glue from the outer surface of the receptacles 2; and to clean the outer surface of such receptacles 2. Furthermore, these so treated receptacles 2 are fed to feeding means 9 for being reinserted into the receptacle handling process.

Alternatively, the recycling circuit can advance the receptacles 2 to recovering units (not shown) recovering the base components of the receptacles 2 themselves. Typically, this alternative allows for recovering the base components and inserting these into the production process, in particular for producing the receptacles 2 themselves.

In use, conveying means 3 advance a succession of receptacles 2 along path P from inlet position 1a to outlet position 1b.

In particular, feeding means 9 feed receptacles 2 to carousel 11. More specifically, feeding means 9 feed each receptacle 2 at first transfer position 10 to one respective handling unit 17 of carousel 11. Furthermore, each receptacle 2 is retained by one respective handling unit 17 and further advances along path P; in particular, each receptacle 2 advances along portion P2 of path P from first transfer position 10 to second transfer position 12.

During advancement along portion P2, each receptacle 2 is carried by the respective support plate 25 of the relative support device 19 of the corresponding handling unit 17, in particular in a vertical position, i.e. axis D of the receptacle 2 is parallel to axis A.

During advancement and prior to labeling of each receptacle 2, the receptacle 2 is pressurized, i.e. a pressurizing gas is led into the receptacle 2 in a known manner through central conduit 39 and pressurization circuit 40.

Furthermore, each drive unit 28 actuates rotation of the respective receptacle 2 around axis D during advancement along portion P2 of path P.

Labeling means 5 feed one respective label 6 to label transfer position 18 for transferring the label 6 to the respective receptacle 2.

Prior to feeding labels 6 to label transfer position 18 labeling means 5 apply a pattern of glue onto the back side of each label 6, in particular in the proximity of the respective leading and trailing edges 6a, 6b.

During further advancement of each label 6 towards the respective receptacle 2, at first, the leading edge 6a gets into contact with the outer surface of the receptacle 2, in particular of the pressurized receptacle 2. Upon rotation of the receptacle 2 around its axis D and further advancement of the receptacle 2 along portion P2 of path P label 6 is wrapped around the receptacle 2. Finally, the back side of the trailing edge 6b is applied to receptacle 2. In particular, trailing edge 6b is applied over the leading edge 6a already stuck to the receptacle 2, thereby, forming the seam section 6c.

Upon further advancement of the respective handling unit 17 along path Q and, accordingly, of the respective receptacle 2 along portion P2 of path P, correct labeling detection means 7 determine the correctness of the application of the respective label 6 on the receptacle 2 based on one or more of the above-identified criterions.

More specifically, correct labeling detection means 7, in particular imaging device 47, inspect/image the seam section 6c and/or the surface structure of the respective label 6. Then, electronic control means 14, in particular the calculation unit 48, check the correctness of the application of the respective label 6 by analyzing the seam section 6c and/or the surface structure of label 6 attached to the relative receptacle 2 and by confronting the obtained results with the predetermined criterions.

Upon further advancement of the respective handling unit 17 along path Q and, accordingly, of receptacle 2 along portion P2 of path P, the electronic control means 14 of apparatus 1 evaluate essentially two cases:
- correct application of label 6: activation/deactivation unit 49 commands the respective filling device 20 to fill the respective receptacle 2 with the pourable product, in particular through first annular conduit 41; and simultaneously the respective receptacle 2 is depressurized, in particular through second annular conduit 42, in a known manner; filling and depressurization are done upon rotation of the respective receptacle 2 around axis D; and
- wrong application of label 6: activation/deactivation unit 49 controls the respective filling device 20 in such a way to solely depressurize the respective receptacle 2, in particular through second annular conduit 42, in a known manner; accordingly, the respective receptacle 2 is not filled with the pourable product.

Alternatively, it is possible to start the filling process of the respective receptacle 2 during or immediately after labeling and prior or simultaneously to the detection of the correct application of the respective label 6. Then, in the case of a correct application, the filling process of the respective receptacle 2 is regularly continued. In the case of a wrong application, however, the filling process is interrupted prior to a complete filling of the respective receptacle 2.

Finally, respective handling unit 17 further advances to second transfer position 12. The respective receptacle 2 is transferred to discharge means 13 and advances towards outlet position 1b.

Receptacles 2 having wrongly applied labels 6 and further advancing along path P are expelled by expelling means 8 from path P at expelling position 50. In particular, these receptacles 2 are expelled from path P during advancement from second transfer position 12 to outlet position 1b. More specifically, pushing element 51 directs the receptacles 2 having wrongly applied labels 6 to expelled-receptacle magazine 52. Then the receptacles 2 are fed to the recycling circuit. Alternatively, the receptacles 2 having wrongly applied labels 6 can be simply disposed of.

In particular, in the recycling circuit, the wrongly applied labels 6 of the expelled receptacles 2 are removed, the outer surfaces of the receptacles 2 are cleaned and the receptacles 2 are again subjected to the steps of application of labels 6, the detection of the correctness of the application of the labels 6 and the filling of the receptacles 2.

Receptacles 2 having correctly applied labels 6 are transferred at second transfer position 12 to discharge means 13 and are further advanced to outlet position 1b for feeding the receptacles 2 to further processing machines (not shown). In particular, receptacles 2 are capped and prepared for distribution to sale points.

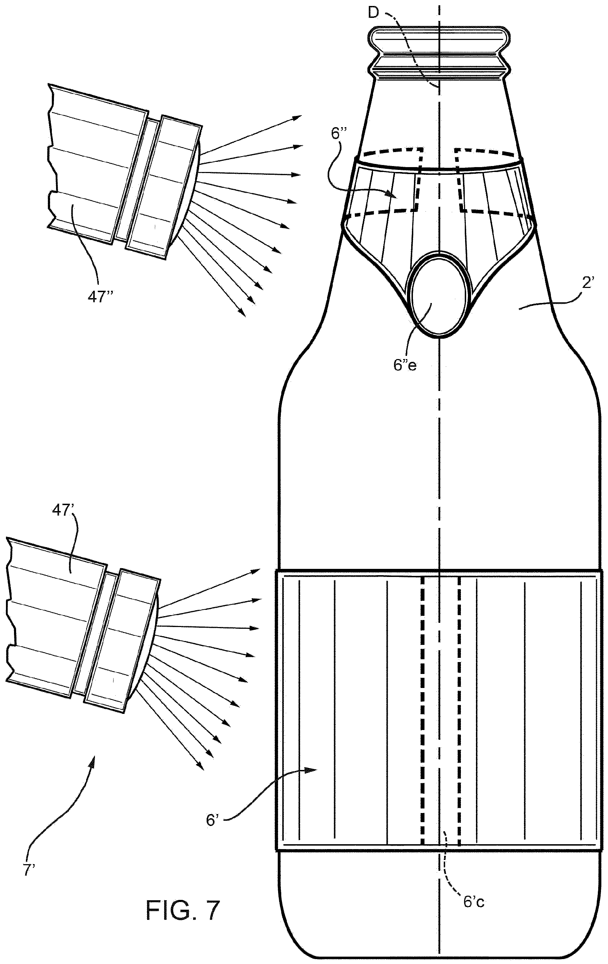

In a possible variation only partially shown in Figure 7 to the extent necessary for the comprehension of the present invention, the apparatus is adapted to handle receptacle 2', which are similar to the receptacles 2 and differ therefrom only in the geometric proportions.

In this case, the apparatus 1 is adapted to apply two or more labels 6', 6", two in the example of Figure 7, onto each receptacle 2'. Labels 6' are similar to labels 6 previously described whilst labels 6" are configured to be applied on the receptacles 2' at upper positions than the corresponding labels 6'.

In the specific example shown in Figure 7, labels 6', 6'' applied on each receptacle 2' are aligned with respect to each other in a predefined manner. This alignment of labels 6', 6" defines a further criterion for determining the correctness of the application of the labels 6', 6" themselves on the respective receptacle 2' .

In the specific case, the detection means 7' comprise two imaging elements 47', 47". Imaging device 47' is configured to inspect/image label 6' and imaging device 47" is adapted to inspect/image label 6".

The electronic control means 14, in particular calculation unit 48, evaluate the relative orientation of label 6' and label 6" with respect to each other. In the specific example, label 6" has a protrusion 6" e, in particular pointing to label 6" applied on the same receptacle 2'. The protrusion 6" e is substantially aligned with respect to the seam section 6'd of the label 6' .

Overall, the relative orientation defines a further criterion for determining the correctness of the application of labels 6', 6" on each receptacle 2'. It must be understood, that, also in this case, the other criterions can be assessed for determining the correctness of application of labels 6' and 6".

The advantages of the method and handling apparatus 1 according to the present invention will be clear from the foregoing description.

In particular, the method and the apparatus 1 avoid filling of receptacles 2, 2' which need to be removed from distribution. Thereby, pourable product is saved which otherwise needs to be discharged once filled into receptacles 2, 2' having wrongly attached labels 6, 6', 6" leading to economical savings.

Furthermore, non-filled and expelled receptacles 2, 2' can be re-utilized by feeding the receptacles 2, 2' to a recycling circuit, which allows for feeding the expelled receptacles 2, 2' to the feeding means 9 and thereby reinserting the already produced receptacle 2, 2' into the filling process or, to, alternatively, recover the base components of the receptacles 2, 2'. In the latter case, the quality of the recycled base components is significantly higher with respect to receptacles which had contact with the pourable product.

Overall, the method and the apparatus 1 allow for a significant reduction in production costs.

Clearly, changes may be made to the method and handling apparatus 1 without, however, departing from the scope of protection as defined in the accompanying claims.

In a possible alternative embodiment not shown, the apparatus 1 may comprise distinct carousels for performing the labeling and filling of the receptacles.

In a further possible alternative embodiment not shown, expelling means 8 may be also arranged to directly act on the receptacles 2 having wrongly attached labels 6 during advancement by the carousel 11.

In another alternative embodiment not shown, the correct labeling detection means 7, 7' may comprise a plurality of imaging elements arranged one after the other along path P.

In a further embodiment not shown, the imaging elements may comprise photo-detectors adapted to detect the light transmission in the area of the seam section 6c for determining the putative presence of areas 6d with single layer structure.

Finally, it must be understood that the present invention is also suited to be applied to the case that the labels have non-rectangular configuration and/or the label's leading and trailing edges do not superimpose each other once applied on the receptacles.

## Claims

1. A receptacle handling apparatus (1) comprising:
- conveying means (3) configured to advance at least one receptacle (2, 2') along a given path (P);
- filling means (4) configured to fill the receptacle (2, 2') with a pourable product as said receptacle (2, 2') is advanced along said path (P);
- labeling means (5) configured to apply at least one label (6, 6', 6") onto the receptacle (2, 2') during advancement of said receptacle (2, 2') along said path (P); and correct labeling detection means (7) to detect correctness of the application of the label (6, 6', 6") on the receptacle (2, 2') according to at least one predetermined criterion; wherein the detection means (7) are configured to detect orientation and/or label surface structure and/or label surface appearance of the label (6, 6', 6") applied on the receptacle (2, 2');
**characterized by** further comprising:
- electronic control means (14) arranged to cooperate with the correct labeling detection means (7) to control the operation of the filling means (4) based on the correctness of the labeling of the receptacle (2, 2'),
- said electronic control means (14) being configured to either selectively enable or disable activation of the filling means (4) based on the detected orientation and/or label surface structure and/or label surface appearance of said label (6, 6', 6").

2. The apparatus (1) according to claim 1, wherein the correct labeling detection means (7) comprise at least one imaging device (47) configured to detect orientation and/or label surface structure and/or label surface appearance of the label (6, 6', 6") applied on the receptacle (2, 2').

3. The apparatus (1) according to claim 2, wherein the imaging device (47) comprises at least one camera for detecting the orientation and/or the label surface structure and/or label surface structure of the label (6, 6', 6") applied on the receptacle (2, 2').

4. The apparatus (1) according to claim 3, wherein the electronic control means (14) are configured to either selectively enable or disable activation of the filling means (4) if the detected orientation and/or label surface structure of said label (6, 6', 6") deviate from respective pre-defined threshold values.

5. The apparatus (1) according to anyone of the preceding claims further comprising receptacle expelling means (8) disposed downstream of said correct labeling detection means (7) along said path (P) and configured to be selectively activated in case of incorrect labeling of the receptacle (2, 2').

6. The apparatus (1) according to claim 2 and 5 wherein the electronic control means (14) are configured to activate receptacle expelling means (8) if the detected orientation and/or label surface structure and/or label surface appearance deviate from the respective predefined threshold values.

7. The apparatus (1) according to claim 5 or 6, wherein the receptacle expelling means (8) comprise at least one pneumatic or mechanical pushing element (51) selectively actuated to act on the receptacle (2, 2') advancing along said path (P).

8. The apparatus (1) according to any one of the preceding claims further comprising at least one handling unit (17) having said filling means (4) and configured to carry said receptacle (2, 2') during advancement along said path (P); wherein the labeling means (5) apply the label (6, 6', 6") on said receptacle (2, 2') while said receptacle (2, 2') is carried by said handling unit (17).

9. The apparatus (1) according to claim 8 further comprising a carousel (11) peripherally carrying said handling unit (17), rotatable around a rotation axis (A) and defining at least a portion (P2) of said path (P).

10. Receptacle handling method comprising the following steps:
- advancing at least one receptacle (2, 2') along a given path (P);
- filling said receptacle (2, 2') with a pourable product as said receptacle (2, 2') is advanced along said path (P);
- applying at least one label (6, 6', 6") on the receptacle (2, 2') during advancement of said receptacle (2, 2') along said path (P);
- detecting correctness of the application of the label (6, 6', 6") on the receptacle (2, 2') based on at least one predetermined criterion; wherein the at least one predetermined criterion of the correctness of the labeling is defined by the orientation and/or label surface structure and/or label surface appearance of the label (6, 6', 6") applied on the receptacle (2, 2';
**characterized by** further comprising the following steps:
- controlling the filling of said receptacle (2, 2') based on the correctness of the application of the label (6, 6', 6") on the receptacle (2, 2') wherein the filling of said receptacle (2, 2') is selectively enabled or disabled based on the detected orientation and/or label surface structure and/or label surface appearance of said label (6, 6', 6").

11. The method according to claim 10, wherein the filling of said receptacle (2, 2') is enabled or disabled if the detected orientation and/or label surface structure of said label (6, 6', 6") deviate from respective predefined threshold values.

12. The method according to any one of claims 10 to 11 further comprising the step of selectively expelling said receptacle (2, 2') based on the correctness of the application of the label (6, 6', 6") on the receptacle (2, 2').

13. The method according to claim 12 wherein the method further comprises the step of removing the incorrect applied label (6, 6' ,6") from the expelled receptacle (2, 2') and to recirculate the expelled receptacle (2, 2') as to subject the receptacle (2, 2') once again to the steps of advancing the receptacle (2, 2') along the path (P), filling the receptacle (2, 2') with a pourable product, applying at least one label (6, 6', 6"), detecting the correctness of the application of the label (6, 6', 6") and controlling the filling of said receptacle (2, 2') based on at least one predetermined criterion.

14. The method according to any one of claims 10 to 13 wherein the detection of the correctness of the application of the label (6, 6', 6") on the receptacle (2, 2') is performed before the filling of said receptacle (2, 2') with said pourable product.

## Patentansprüche

1. Behälterhandhabungsvorrichtung (1), die Folgendes umfasst:
- Transportmittel (3), die konfiguriert sind, wenigstens einen Behälter (2, 2') entlang eines gegebenen Pfads (P) zu befördern;
- Füllmittel (4), die konfiguriert sind, den Behälter (2, 2') mit einem fließfähigen Produkt zu füllen, wenn der Behälter (2, 2') entlang des Pfads (P) befördert wird;
- Etikettiermittel (5), die konfiguriert sind, während einer Beförderung des Behälters (2, 2') entlang des Pfads (P) wenigstens ein Etikett (6, 6', 6") auf den Behälter (2, 2') aufzubringen; und Mittel (7) zum Detektieren einer korrekten Etikettierung, um die Korrektheit des Aufbringens des Etiketts (6, 6', 6") auf den Behälter (2, 2') in Übereinstimmung mit wenigstens einem vorgegebenen Kriterium zu detektieren;
wobei die Detektionsmittel (7) konfiguriert sind, eine Ausrichtung und/oder eine Etikettoberflächenstruktur und/oder ein Erscheinungsbild der Etikettoberfläche des Etiketts (6, 6', 6"), das auf den Behälter (2, 2') aufgebracht wurde, zu detektieren;
**dadurch gekennzeichnet, dass** die Vorrichtung ferner Folgendes umfasst:
- elektronische Steuerungsmittel (14), die so ausgelegt sind, dass sie mit den Mitteln (7) zum Detektieren einer korrekten Etikettierung zusammenwirken, um den Betrieb der Füllmittel (4) auf der Basis der Korrektheit der Etikettierung des Behälters (2, 2') zu steuern,
- wobei die elektronischen Steuerungsmittel (14) konfiguriert sind, eine Aktivierung der Füllmittel (4) auf der Basis der detektierten Ausrichtung und/oder der Etikettoberflächenstruktur und/oder des Erscheinungsbilds der Etikettoberfläche des Etiketts (6, 6', 6") wahlweise freizugeben oder zu sperren.

2. Vorrichtung (1) nach Anspruch 1, wobei die Mittel (7) zum Detektieren einer korrekten Etikettierung wenigstens eine Bildaufnahmevorrichtung (47) umfassen, die konfiguriert ist, eine Ausrichtung und/oder eine Etikettoberflächenstruktur und/oder das Erscheinungsbild der Etikettoberfläche des Etiketts (6, 6', 6"), das auf den Behälter (2, 2') aufgebracht wurde, zu detektieren.

3. Vorrichtung (1) nach Anspruch 2, wobei die Bildaufnahmevorrichtung (47) wenigstens eine Kamera zum Detektieren der Ausrichtung und/oder der Etikettoberflächenstruktur und/oder der Etikettoberflächenstruktur des Etiketts (6, 6', 6"), das auf den Behälter (2, 2') aufgebracht wurde, umfasst.

4. Vorrichtung (1) nach Anspruch 3, wobei die elektronischen Steuerungsmittel (14) so konfiguriert sind, dass sie die Aktivierung der Füllmittel (4) wahlweise freigeben oder sperren, wenn die detektierte Ausrichtung und/oder die Etikettoberflächenstruktur des Etiketts (6, 6', 6") von jeweiligen im Voraus definierten Schwellenwerten abweicht.

5. Vorrichtung (1) nach einem der vorhergehenden Ansprüche, die ferner Mittel (8) zum Ausstoßen des Behälters umfasst, die stromabwärts der Mittel (7) zum Detektieren einer korrekten Etikettierung entlang des Pfads (P) angeordnet sind und konfiguriert sind, im Fall einer nicht korrekten Etikettierung des Behälters (2, 2') wahlweise aktiviert zu werden.

6. Vorrichtung (1) nach Anspruch 2 und 5, wobei die elektronischen Steuerungsmittel (14) konfiguriert sind, die Mittel (8) zum Ausstoßen des Behälters zu aktivieren, falls die detektierte Ausrichtung und/oder die Etikettoberflächenstruktur und/oder das Erscheinungsbild der Etikettoberfläche von den jeweiligen im Voraus definierten Schwellenwerten abweicht.

7. Vorrichtung (1) nach Anspruch 5 oder 6, wobei die Mittel (8) zum Ausstoßen des Behälters wenigstens ein pneumatisches oder mechanisches Stoßelement (51) umfassen, das wahlweise betätigt wird, um auf den Behälter (2, 2') einzuwirken, der entlang des Pfads (P) befördert wird.

8. Vorrichtung (1) nach einem der vorhergehenden Ansprüche, die ferner wenigstens eine Handhabungseinheit (17) umfasst, die die Füllmittel (4) aufweist und konfiguriert ist, den Behälter (2, 2') während einer Beförderung entlang des Pfads (P) zu tragen; wobei die Etikettiermittel (5) das Etikett (6, 6', 6") auf den Behälter (2, 2') aufbringen, während der Behälter (2, 2') von der Handhabungseinheit (17) getragen wird.

9. Vorrichtung (1) nach Anspruch 8, die ferner ein Karussell (11) umfasst, das die Handhabungseinheit (17) drehbar um eine Drehachse (A) in Umfangsrichtung trägt und wenigstens einen Abschnitt (P2) des Pfads (P) definiert.

10. Behälterhandhabungsverfahren, das die folgenden Schritte umfasst:
- Befördern wenigstens eines Behälters (2, 2') entlang eines gegebenen Pfads (P);
- Füllen des Behälters (2, 2') mit einem fließfähigen Produkt, wenn der Behälter (2, 2') entlang des Pfads (P) befördert wird;
- Aufbringen wenigstens eines Etiketts (6, 6', 6") auf den Behälter (2, 2') während einer Beförderung des Behälters (2, 2') entlang des Pfads (P);
- Detektieren der Korrektheit des Aufbringens des Etiketts (6, 6', 6") auf den Behälter (2, 2') auf der Basis wenigstens eines vorgegebenen Kriteriums; wobei das wenigstens eine vorgegebene Kriterium der Korrektheit der Etikettierung durch die Ausrichtung und/oder die Etikettoberflächenstruktur und/oder das Erscheinungsbild der Etikettoberfläche des Etiketts (6, 6', 6"), das auf den Behälter (2, 2') aufgebracht wurde, definiert ist;
**dadurch gekennzeichnet, dass** das Verfahren ferner den folgenden Schritt umfasst:
- Steuern des Füllens des Behälters (2, 2') auf der Basis der Korrektheit des Aufbringens des Etiketts (6, 6', 6") auf den Behälter (2, 2'), wobei das Füllen des Behälters (2, 2') auf der Basis der detektierten Ausrichtung und/oder der Etikettoberflächenstruktur und/oder des Erscheinungsbilds der Etikettoberfläche des Etiketts (6, 6', 6") wahlweise freigegeben oder gesperrt wird.

11. Verfahren nach Anspruch 10, wobei das Füllen des Behälters (2, 2') freigegeben oder gesperrt wird, wenn die detektierte Ausrichtung und/oder die Etikettoberflächenstruktur des Etiketts (6, 6', 6") von jeweiligen im Voraus definierten Schwellenwerten abweicht.

12. Verfahren nach einem der Ansprüche 10 bis 11, das ferner den Schritt zum wahlweisen Ausstoßen des Behälters (2, 2') auf der Basis der Korrektheit des Aufbringens des Etiketts (6, 6', 6") auf den Behälter (2, 2') umfasst.

13. Verfahren nach Anspruch 12, wobei das Verfahren ferner den Schritt des Entfernens des nicht korrekt aufgebrachten Etiketts (6, 6', 6") von dem ausgestoßenen Behälter (2, 2') und das erneute Bringen in Umlauf des ausgestoßenen Behälters (2, 2') umfasst, um den Behälter (2, 2') erneut den Schritten zum Befördern des Behälters (2, 2') entlang des Pfads (P), zum Füllen des Behälters (2, 2') mit einem fließfähigen Produkt, zum Aufbringen wenigstens eines Etiketts (6, 6', 6"), zum Detektieren der Korrektheit des Aufbringens des Etiketts (6, 6', 6") und zum Steuern des Füllens des Behälters (2, 2') auf der Basis wenigstens eines im Voraus definierten Kriteriums zu unterwerfen.

14. Verfahren nach einem der Ansprüche 10 bis 13, wobei die Detektion der Korrektheit des Aufbringens des Etiketts (6, 6', 6") auf den Behälter (2, 2') vor dem Füllen des Behälters (2, 2') mit dem fließfähigen Produkt durchgeführt wird.

## Revendications

1. Appareil de manipulation de récipients (1) comprenant :
- des moyens de transport (3) configurés pour faire avancer au moins un récipient (2, 2') le long d'un chemin donné (P) ;
- des moyens de remplissage (4) configurés pour remplir le récipient (2, 2') avec un produit versable lorsque ledit récipient (2, 2') est avancé le long dudit chemin (P) ;
- des moyens d'étiquetage (5) configurés pour appliquer au moins une étiquette (6, 6', 6") sur le récipient (2, 2') pendant l'avance dudit récipient (2, 2') le long dudit chemin (P) ; et des moyens de détection d'étiquetage correct (7) pour détecter la justesse de l'application de l'étiquette (6, 6', 6") sur le récipient (2, 2') en fonction d'au moins un critère prédéterminé ;
dans lequel les moyens de détection (7) sont configurés pour détecter une orientation et/ou une structure de surface d'étiquette et/ou une apparence de surface d'étiquette de l'étiquette (6, 6', 6") appliquée sur le récipient (2, 2') ;
**caractérisé en ce qu'**il comprend en outre :
- des moyens de contrôle électroniques (14) agencés pour coopérer avec les moyens de détection d'étiquetage correct (7) pour contrôler le fonctionnement des moyens de remplissage (4) sur la base de la justesse de l'étiquetage du récipient (2, 2'),
- lesdits moyens de contrôle électroniques (14) étant configurés pour permettre ou empêcher sélectivement l'activation des moyens de remplissage (4) sur la base de l'orientation et/ou la structure de surface d'étiquette et/ou l'apparence de surface d'étiquette détectées de ladite étiquette (6, 6', 6").

2. Appareil (1) selon la revendication 1, dans lequel les moyens de détection d'étiquetage correct (7) comprennent au moins un dispositif d'imagerie (47) configuré pour détecter une orientation et/ou une structure de surface d'étiquette et/ou une apparence de surface d'étiquette de l'étiquette (6, 6', 6") appliquée sur le récipient (2, 2').

3. Appareil (1) selon la revendication 2, dans lequel le dispositif d'imagerie (47) comprend au moins une caméra destinée à détecter l'orientation et/ou la structure de surface d'étiquette et/ou l'apparence de surface d'étiquette de l'étiquette (6, 6', 6") appliquée sur le récipient (2, 2').

4. Appareil (1) selon la revendication 3, dans lequel les moyens de contrôle électroniques (14) sont configurés pour permettre ou empêcher sélectivement l'activation des moyens de remplissage (4) si l'orientation et/ou la structure de surface d'étiquette détectées de ladite étiquette (6, 6', 6") s'écartent de valeurs seuils prédéfinies respectives.

5. Appareil (1) selon l'une quelconque des revendications précédentes comprenant en outre des moyens d'expulsion de récipient (8) disposés en aval desdits moyens de détection d'étiquetage correct (7) le long dudit chemin (P) et configurés pour être sélectivement activés en cas d'étiquetage incorrect du récipient (2, 2').

6. Appareil (1) selon la revendication 2 et 5 dans lequel les moyens de contrôle électroniques (14) sont configurés pour activer des moyens d'expulsion de récipient (8) si l'orientation et/ou la structure de surface d'étiquette et/ou l'apparence de surface d'étiquette détectées s'écartent des valeurs seuils prédéfinies respectives.

7. Appareil (1) selon la revendication 5 ou 6, dans lequel les moyens d'expulsion de récipient (8) comprennent au moins un élément de poussée pneumatique ou mécanique (51) sélectivement actionné pour agir sur le récipient (2, 2') avançant le long dudit chemin (P).

8. Appareil (1) selon l'une quelconque des revendications précédentes comprenant en outre au moins une unité de manipulation (17) ayant lesdits moyens de remplissage (4) et configurée pour porter ledit récipient (2, 2') pendant l'avance le long dudit chemin (P) ; dans lequel les moyens d'étiquetage (5) appliquent l'étiquette (6, 6', 6") sur ledit récipient (2, 2') pendant que ledit récipient (2, 2') est porté par ladite unité de manipulation (17).

9. Appareil (1) selon la revendication 8 comprenant en outre un carrousel (11) portant sur sa périphérie ladite unité de manipulation (17), rotatif autour d'un axe de rotation (A) et définissant au moins une partie (P2) dudit chemin (P).

10. Procédé de manipulation de récipients comprenant les étapes suivantes :
- faire avancer au moins un récipient (2, 2') le long d'un chemin donné (P) ;
- remplir ledit récipient (2, 2') avec un produit versable lorsque ledit récipient (2, 2') est avancé le long dudit chemin (P) ;
- appliquer au moins une étiquette (6, 6', 6") sur le récipient (2, 2') pendant l'avance dudit récipient (2, 2') le long dudit chemin (P) ;
- détecter la justesse de l'application de l'étiquette (6, 6', 6") sur le récipient (2, 2') sur la base d'au moins un critère prédéterminé ; l'au moins un critère prédéterminé de la justesse de l'étiquetage étant défini par l'orientation et/ou la structure de surface d'étiquette et/ou l'apparence de surface d'étiquette de l'étiquette (6, 6', 6") appliquée sur le récipient (2, 2')
**caractérisé en ce qu'**il comprend en outre l'étape suivante :
- contrôler le remplissage dudit récipient (2, 2') sur la base de la justesse de l'application de l'étiquette (6, 6', 6") sur le récipient (2, 2'), le remplissage dudit récipient (2, 2') étant sélectivement permis ou empêché sur la base de l'orientation et/ou la structure de surface d'étiquette et/ou l'apparence de surface d'étiquette détectées de ladite étiquette (6, 6', 6").

11. Procédé selon la revendication 10, dans lequel le remplissage dudit récipient (2, 2') est permis ou empêché si l'orientation et/ou la structure de surface d'étiquette détectées de ladite étiquette (6, 6', 6") s'écartent de valeurs seuils prédéfinies respectives.

12. Procédé selon l'une quelconque des revendications 10 à 11 comprenant en outre l'étape d'expulsion sélective dudit récipient (2, 2') sur la base de la justesse de l'application de l'étiquette (6, 6', 6") sur le récipient (2, 2').

13. Procédé selon la revendication 12, le procédé comprenant en outre l'étape consistant à retirer l'étiquette incorrectement appliquée (6, 6', 6") du récipient expulsé (2, 2') et à remettre en circulation le récipient expulsé (2, 2') de manière à soumettre à nouveau le récipient (2, 2') aux étapes d'avance du récipient (2, 2') le long du chemin (P), remplissage du récipient (2, 2') avec un produit versable, application d'au moins une étiquette (6, 6', 6"), détection de la justesse de l'application de l'étiquette (6, 6', 6") et contrôle du remplissage dudit récipient (2, 2') sur la base d'au moins un critère prédéterminé.

14. Procédé selon l'une quelconque des revendications 10 à 13 dans lequel la détection de la justesse de l'application de l'étiquette (6, 6', 6") sur le récipient (2, 2') est effectuée avant le remplissage dudit récipient (2, 2') avec ledit produit versable.
